(19) **Europäisches Patentamt / European Patent Office / Office européen des brevets**

(11) **EP 4 335 825 A1**

(12) # EUROPEAN PATENT APPLICATION

(43) Date of publication:
**13.03.2024 Bulletin 2024/11**

(21) Application number: **23194664.1**

(22) Date of filing: **31.08.2023**

(51) International Patent Classification (IPC):
**C01G 53/00** (2006.01)    **H01M 4/04** (2006.01)
**H01M 4/1391** (2010.01)    **H01M 4/36** (2006.01)
**H01M 4/485** (2010.01)    **H01M 4/505** (2010.01)
**H01M 4/525** (2010.01)    **H01M 10/054** (2010.01)

(52) Cooperative Patent Classification (CPC):
**C01G 53/50; H01M 4/131; H01M 4/366;**
**H01M 4/505; H01M 4/525; H01M 10/054;**
C01P 2002/52; C01P 2002/54; C01P 2002/72;
C01P 2002/74; C01P 2004/51; C01P 2004/61;
C01P 2006/11; C01P 2006/12; C01P 2006/40;

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 CN 202211082899**

(71) Applicant: **Guizhou Zhenhua E-CHEM Inc.**
**Guiyang City, Guizhou 550014 (CN)**

(72) Inventors:
- **ZHOU, Chaoyi**
  **Guiyang City, 550014 (CN)**

- **XIANG, Qianxin**
  **Guiyang City, 550014 (CN)**
- **WU, Yang**
  **Guiyang City, 550014 (CN)**
- **LI, Jinkai**
  **Guiyang City, 550014 (CN)**
- **WU, Xingping**
  **Guiyang City, 550014 (CN)**
- **GU, Ran**
  **Guiyang City, 550014 (CN)**

(74) Representative: **Dehns**
**St. Bride's House**
**10 Salisbury Square**
**London EC4Y 8JD (GB)**

(54) ## CATHODE MATERIAL FOR SODIUM ION BATTERY WITH COATING STRUCTURE AND PREPARATION METHOD AND USE THEREOF

(57) The present disclosure is in the technical field of sodium ion batteries, and particularly relates to a cathode material for a sodium ion battery having a coating structure and a preparation method and use thereof. The general chemical formula of the cathode material for a sodium ion battery having a coating structure is $Na_{1+a}Ni_xMn_yFe_zA_mB_nO_2$, where $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$. A preparation method of a cathode material for a sodium ion battery comprises the steps of: firstly, mixing a sodium source, a nickel source, a manganese source, an iron source and an A source uniformly, and then performing a first sintering, cooling and crushing to obtain a semi-finished product; then, after mixing the semi-finished product with a B source uniformly, performing a second sintering, cooling and crushing to obtain the cathode material for a sodium ion battery. The cathode material for a sodium ion battery according to the present disclosure is structurally stable, and a surface coating layer thereof inhibits side reactions with an electrolyte, so that the cycling performance is significantly improved.

EP 4 335 825 A1

(52) Cooperative Patent Classification (CPC): (Cont.)
C01P 2006/80; Y02E 60/10

**Description**

**Technical Field**

The present disclosure is in the technical field of sodium ion batteries, and particularly relates to a cathode material for a sodium ion battery and a preparation method and use thereof.

**Background Art**

Concerns about global lithium resources and the need for new scale energy storage applications have led to the continuous development of new battery areas. With the rich experience of lithium ion batteries, sodium ion batteries have been rapidly developed. The cathode material for a sodium ion battery mainly includes layered and tunnel-type transition metal oxides, polyanion compounds, prussian blue analogues and organic materials, etc. In addition to the research on these systems, the research and development of sodium ion battery are also in the direction of low cost and practicality. In 2011, Komaba etc. reported the full cell performance of ‖$NaNi_{0.5}Mn_{0.5}O_2$ with hard carbon first. In the same year, FARADION, the world's first sodium ion battery company, was established. In 2013, Goodenough (US) etc. proposed Prussian white cathode material with high voltage and excellent rate performance. In 2014, Hu Yongsheng (CN) etc. firstly found the electrochemical activity of $Cu^{3+}/Cu^{2+}$ redox couple in layered oxides, and designed and prepared a series of low-cost Cu-based cathode materials.

The cathode oxides of sodium ion batteries mainly include layered structure oxides and tunnel structure oxides, wherein the tunnel structure oxides have a unique "S"-shaped channel in the crystal structure, have better rate performance and have higher stability to air and water, but have a lower charge-discharge specific capacity at the first cycle, resulting in a smaller specific capacity actually available. Layered oxides with periodic layered structure, simple preparation method, high specific capacity and high voltage are the main cathode materials for sodium ion batteries. In the preparation process, considering the loss of sodium element, excessive sodium salt is often added in the material production process, resulting in the residue of sodium salt after the material is sintered, mainly in the form of sodium carbonate and sodium hydroxide, referred to as free sodium. If the alkalinity of the cathode material for a sodium ion battery is too high, it will cause the material to absorb moisture easily, increase viscosity in the process of slurry stirring, and easily form jelly-like, resulting in poor processing performance; the layered oxide of sodium ions is generally a transition metal layer composed of an $MO_6$ octahedral structure formed by a transition metal element and six surrounding oxygen, and sodium ions are located between the transition metal layers to form a layered structure in which MOe polyhedral layers and NaOe alkali metal layers are alternately arranged. These structures can cause lattice distortion and phase transformation during the charge and discharge of sodium ions, which hinders the transport and diffusion of sodium ions, so that most of the sodium ions are free on the surface of the material and react with the electrolyte to form irreversible capacity loss, and at the same time deteriorate the cycling performance, resulting in battery performance degradation or even failure, thus leading to safety hazards.

**Summary of the Invention**

The technical problem to be solved by the present disclosure is: in the prior art, the cathode material of a sodium ion battery is prone to lattice distortion and phase change during charging and discharging, which hinders the transport and diffusion of sodium ions, so that most of the sodium ions are free on the surface of the material and react with the electrolyte to form irreversible capacity loss, and at the same time deteriorate the cycling performance, resulting in battery performance degradation or even failure.

In view of the above-mentioned technical problem, it is an object of the present disclosure to provide a cathode material for a sodium ion battery, a preparation method and use thereof. The structure of the cathode material for a sodium ion battery is relatively stable, and the occupation of sodium ions inside the material is relatively complete. At the same time, the surface of the material is modified by coating the material, thereby forming an effective protective layer on the surface of the material, inhibiting side reactions between the material and the electrolyte, reducing the loss of irreversible capacity, and improving the cycling performance of the material.

Specifically, the present disclosure proposes the following technical solutions:

In a first aspect, the present disclosure provides a cathode material for a sodium ion battery having a coating structure, wherein the cathode material has a general chemical formula of: $Na_{1+a}Ni_xMn_yFe_zA_mB_nO_2$, where $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$;

A is a modified element, and the A element comprises one or two or more of Ti, Zn, Co, Al, Zr, Y, Ca, Li, Rb, Cs, W, Ce, Mo, Ba, Mg, Ta, Nb, V, Sc, Sr, B, F, P, and Cu elements;

the B element is an element in a coating layer, and the B element comprises one or two or more of Ti, Co, Al, Zr, Y, Ca, Li, Rb, Cs, W, Ce, Mo, Ba, Mg, Ta, Nb, V, Sc, Sr, B, F, P, and Cu elements.

In some examples, the cathode material has a general chemical formula of: $Na_{1+a}Ni_xMn_yFe_zA_mB_nO_2$, where $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$.

In some examples, the cathode material has the general chemical formula: $Na_{1+a}Ni_xMn_yFe_zA_mB_nO_2$, wherein $-0.35 \; a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$, $0.05 \leq m \leq 0.15$; preferably, $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$, $0.05 \leq m \leq 0.15$.

In some examples, the cathode material has the general chemical formula: $Na_{1+a}Ni_xMn_yFe_zA_mB_nO_2$, wherein $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$, $0.05 \leq m \leq 0.13$; preferably, $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$, $0.05 \leq m \leq 0.13$.

In some examples, A comprises one or two or more of Ti, Zn, Al, Zr, Y, Ca, Li, W, Ce, Mo, Ba, Mg, Ta, Nb, Sc, Sr, B, F, P, and Cu elements.

In some examples, A comprises one or two or more of Ti, Zn, Al, Y, Ca, Zr, Li, Mg, Mn, Sr, F, B, and Cu elements.

In some examples, the B comprises one or two or more of Ti, Co, Mn, Al, Zr, Y, Li, Mg, B, F, P, and Cu elements.

In some examples, more preferably, B is selected from one or a combination of two or more of Mg, Zr, P, F, Al, Mg, Ti, and B elements.

In some examples, A comprises a Zn element and an M element, wherein a content of the Zn element is represented by b, and a total content of the Zn element and the M element is m; the general chemical formula of the cathode material is: $Na_{1+a}Ni_xMn_yFe_zZn_bM_{m-b}B_nO_2$, $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$, $0 < b \leq 0.12$; preferably, $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$, $0 < b \leq 0.12$; the M element being selected from one or two or more of Ti, Co, Mn, Al, Zr, Y, Ca, Li, Rb, Cs, W, Ce, Mo, Ba, Mg, Ta, Nb, V, Sc, Sr, B, F, P, and Cu elements.

In some examples, the M element is selected from one or two or more of Mn, Ti, Al, Y, Ca, Mg, F, P, B, and Cu elements.

In some examples, A comprises a Ti element and an N element, wherein a content of the Ti element is represented by c, and a total content of the Ti element and the N element is m; the cathode material has a general chemical formula of $Na_{1+a}Ni_xMn_yFe_zTi_cN_{m-c}B_nO_2$, $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$, $0 < c < 0.24$; preferably, $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$, $0 < c < 0.24$; and the N is one or two or more selected from Ti, Zn, Co, Mn, Al, Zr, Y, Ca, Li, Rb, Cs, W, Ce, Mo, Ba, Mg, Ta, Nb, V, Sc, Sr, B, F, P, and Cu elements.

In some examples, the N is selected from one or two or more of Mn, Mg, F, Li, Zn, Al, Y, Ca, B, and Cu elements.

In some examples, the A element comprises a Zn element, a Ti element, and an X element, wherein a content of the Zn element is represented by d, a content of the Ti element is represented by e, and a total content of the Zn element, the Ti element, and the X element is m; the cathode material has the general chemical formula of $Na_{1+a}Ni_xMn_yFe_zZn_dTi_eX_{m-d-e}B_nO_2$, $-0.35 \leq a \leq 0.20$, $0.08 < x \leq 0.5$, $0.05 < y \leq 0.48$, $0.03 < z < 0.4$, $0.03 < m < 0.24$, $0.001 < n < 0.06$, $x+y+z+m+n=1$, $0 < d \leq 0.1$, $0 < e < 0.24$; preferably, $-0.35 \leq a \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, $x+y+z+m+n=1$, $0 < d \leq 0.1$, $0 < e < 0.24$; and the X is selected from one or a combination of two or more of Co, Mn, Al, Zr, Y, Ca, Li, Rb, Cs, W, Ce, Mo, Ba, Mg, Ta, Nb, V, Sc, Sr, B, F, P, and Cu elements .

In some examples, X is selected from one or a combination of two or more of Co, Mn, Al, Zr, Y, Ca, Li, W, Ba, Mg, Nb, B, F, P, and C elements.

In some examples, in a powder X-ray diffraction spectrum of the cathode material for a sodium ion battery, there are at least two diffraction peaks having a diffraction angle 2Θ value between 41°-46°.

In some examples, the two diffraction peaks having a diffraction angle 2Θ value between 41°-46° have a full width at half maximum FWHM, between 0.07°-0.29°.

In some examples, the he two diffraction peaks having a diffraction angle 2Θ value between 41°-46° have an interplanar spacing between 1.85Å-2.75Å.

In some examples, there are two diffraction peaks having a diffraction angle 2Θ value between 41°-46°, the diffraction angle 2Θ values of the two diffraction peaks being around 41° and around 45°, respectively;

In some examples, the diffraction peak having a diffraction angle 2Θ value around 41° has a full width at half maximum FWHM, between 0.07°-0.17°.

In some examples, the diffraction peak having a diffraction angle 2Θ value around 45° has a full width at half maximum FWHM, between 0.07°-0.23°.

In some examples, there are at least three diffraction peaks having a diffraction angle 2Θ value between 30°-40°.

In some examples, there are three diffraction peaks having a diffraction angle 2Θ value between 30°-40°, the diffraction angle 2Θ values being around 33°, around 35° and around 36°, respectively.

In some examples, there are four diffraction peaks having a diffraction angle 2Θ value between 30°-40°, the diffraction angle 2Θ values being around 32°, around 33°, around 35° and around 36°, respectively.

In some examples, there are four diffraction peaks having a diffraction angle 2Θ value between 30°-40°, the diffraction angle 2Θ values being around 33°, around 35°, around 36° and around 37°, respectively.

In some examples, there are four diffraction peaks having a diffraction angle 2Θ value between 30°-40°, the diffraction angle 2Θ values being around 33°, around 34°, around 35° and around 36°, respectively.

In some examples, there are five diffraction peaks having a diffraction angle 2Θ value between 30°-40°, the diffraction angle 2Θ values being around 32°, around 33°, around 34°, around 35° and around 36°, respectively.

In some examples, a ratio of peak intensity of a (003) diffraction peak at a diffraction angle 2Θ value of around 16° to a peak intensity of a (104) diffraction peak at a diffraction angle 2Θ value of around 41° is 0.4-1.4.

In some examples, a ratio of peak intensity of a (003) diffraction peak at a diffraction angle 2Θ value of around 16° to a peak intensity of a (104) diffraction peak at a diffraction angle 2Θ value of around 41° is 0.45-1.2.

In some examples, the cathode material for a sodium ion battery has a specific surface area of 0.2-1.2m$^2$/g.

In some examples, the cathode material for a sodium ion battery has a specific surface area of 0.4-1m$^2$/g.

In some examples, the cathode material for a sodium ion battery has a particle size D50 of 2-18μm.

In some examples, the cathode material for a sodium ion battery has a particle size D50 of 3-15μm.

In some examples, the cathode material for a sodium ion battery has a particle size D50 of 5-11μm.

In some examples, the cathode material for a sodium ion battery has a tap density of 1.2-2.9g/cm$^3$.

In some examples, the cathode material for a sodium ion battery has a tap density of 1.2-2.6g/cm$^3$.

In some examples, the cathode material for a sodium ion battery has a powder X-ray diffraction spectrum showing an α-NaFeO$_2$ type layered structure.

In some examples, a total free sodium content of the cathode material for a sodium ion battery is 2.3% or less.

In some examples, a total free sodium content of the cathode material for a sodium ion battery is 2.0% or less.

In a second aspect, the present disclosure provides a preparation method of a cathode material for a sodium ion battery, characterized by comprising the steps of:

(1) after mixing a sodium source, a nickel source, a manganese source, an iron source and an A source uniformly, performing a first sintering, cooling and crushing to obtain a semi-finished product; and
(2) after mixing the semi-finished product with a B source uniformly, then performing a second sintering, cooling and crushing to obtain the cathode material for a sodium ion battery .

In some examples, in step (1), a solid phase mixture method is used for mixing the sodium source, the nickel source, the manganese source, the iron source and the A source.

In some examples, in step (1), the solid-phase mixing method comprises adding a sodium source, a nickel source, a manganese source, an iron source and an A source in a proportion to a mixer for mixing, wherein a rotational speed of the mixing is 4000-25000rpm; and a mixing time is 10-50min.

In some examples, in step (2), the semi-finished product is mixed with the B source using a solid phase mixing method.

In some examples, in step (2), in step (2), the semi-finished product is mixed with the B source using a ball milling method.

In some examples, in step (2), the solid phase mixing method is mixing the semi-finished product obtained in step (1) and the B source in a molar ratio until uniform, and then adding same to a ball mill and mixing same for a time of 8-30min; and/or the ball milling frequency is 40-55Hz.

In some examples, in step (1), conditions of the first sintering are that a heating rate is 3-5°C/min, a temperature is 780-980°C, and a time is 8-30h.

In some examples, in step (2), conditions of the second sintering are that a heating rate is 6-9°C/min, a temperature is 180-850°C, and a time is 2-10h.

In some examples, in step (1), the grinding discs are spaced 0-2mm apart; and/or a rotational speed is 500-3000r/min.

In some examples, in step (1), the grinding discs are spaced 0-1.5 mm apart; and/or a rotational speed is 1000-2800 r/min.

In some examples, in step (2), the grinding discs are spaced 0-2 mm apart; and/or a rotational speed is 500-3000 r/min.

In some examples, in step (2), the grinding discs are spaced 0-1.5 mm apart; and/or a rotational speed is 1000-2800 r/min.

In some examples, an atmosphere of the first sintering is a gas containing oxygen.

In some examples, the atmosphere of the first sintering is air, oxygen, or a mixture thereof;

In some examples, an atmosphere of the second sintering is a gas containing oxygen.

In some examples, the atmosphere of the second sintering is air, oxygen, or a mixture thereof.

In some examples, the Na source comprises one or two or more of sodium hydroxide, sodium carbonate, sodium nitrate, sodium oxalate, sodium chloride, sodium fluoride, and sodium acetate.

In some examples, the A source is selected from oxides of one or two or more of Ti, Zn, Co, Al, Zr, Y, Ca, Li, Rb, Cs, W, Ce, Mo, Ba, Mg, Ta, Nb, V, Sc, Sr, B, and Cu elements, salts thereof, or organics thereof;

In some examples, the A source is selected from carbonates, oxalates, nitrates or oxides of one or two or more of Ti, Zn, Co, Al, Zr, Y, Ca, Li, Rb, Cs, W, Ce, Mo, Ba, Mg, Ta, Nb, V, Sc, Sr, B, and Cu elements;

In some examples, the A source comprises one or two or more of zinc oxide, titanium dioxide, calcium oxide, copper oxide, aluminum oxide, yttrium trioxide, diboron trioxide, barium oxide, niobium oxide, magnesium oxide, and zirconium oxide.

In some examples, the B source is oxides of one or two or more selected from Ti, Co, Mn, Al, Zr, Y, Ca, Li, Rb, Cs, W, Ce, Mo, Ba, Mg, Ta, Nb, V, Sc, Sr, B, F, P, and Cu elements, salts thereof, or organics thereof;

In some examples, the B source is selected from carbonates, oxalates, nitrates, or oxides of one or two or more of Ti, Co, Mn, Al, Zr, Y, Ca, Li, Rb, Cs, W, Ce, Mo, Ba, Mg, Ta, Nb, V, Sc, Sr, B, F, P, and Cu elements;

In some examples, the B source comprises one or two or more of magnesium oxide, aluminum oxide, titanium oxide, magnesium acetate, aluminum acetate, aluminum nitrate, boric acid, and boron oxide.

In some examples, the present disclosure provides a cathode material for a sodium ion battery prepared by the preparation method of a cathode material for a sodium ion battery.

In a third aspect, the present disclosure provides a positive electrode for a sodium ion battery comprising the cathode material for a sodium ion battery as a cathode active material.

In a fourth aspect, the present disclosure provides a sodium ion battery comprising the positive electrode for a sodium ion battery, a negative electrode and an electrolyte comprising a sodium salt.

In a fifth aspect, the present disclosure provides use of the sodium ion battery as a power source in photovoltaic, electric power, energy storage systems or mobile storage devices or low-end electric vehicles;

In some examples, the present disclosure provides use of the sodium ion battery in a distributed energy storage, centralized energy storage or low-end power battery energy storage device.

In a fifth aspect, the present disclosure provides an electrical power system, energy storage system or mobile storage device prepared from the sodium ion battery.

**Advantageous effects achieved by the present disclosure**

The present disclosure provides a cathode material for a sodium ion battery having the chemical formula $Na_{1+a}Ni_xMn_yFe_zA_mB_nO_2$. On the one hand, modified element A is added to improve the structural stability of the material and form a special XRD structure, which provides a stable channel for the transport of sodium ions and enables the sufficient transport and diffusion of sodium ions to the interior of the material, thereby reducing the content of free sodium ions on the surface of the material; on the other hand, the surface of the material is modified by coating the B element, so as to form an effective protective layer on the surface of the material, inhibit side reactions between the material and the electrolyte, reduce the loss of irreversible capacity, and improve the recycling performance of the material.

**Brief Description of the Drawings**

Fig. 1 is an XRD plot of the cathode material for a sodium ion battery of example 1.
Fig. 2 is a graph showing the cycling profile of the cathode material for a sodium ion battery of example 1.
Fig. 3 is an XRD plot of the cathode material for a sodium ion battery of example 2.
Fig. 4 is a graph showing the cycling profile of the cathode material for a sodium ion battery of example 2.
Fig. 5 is an XRD plot of the cathode material for a sodium ion battery of example 3.
Fig. 6 is a graph showing the cycling profile of the cathode material for a sodium ion battery of example 3.
Fig. 7 is an XRD plot of the cathode material for a sodium ion battery of example 4.
Fig. 8 is a graph showing the cycling profile of the cathode material for a sodium ion battery of example 4.
Fig. 9 is an XRD plot of the cathode material for a sodium ion battery of example 5.
Fig. 10 is a graph showing the cycling profile of the cathode material for a sodium ion battery of example 5.
Fig. 11 is an XRD plot of the cathode material for a sodium ion battery of example 6.
Fig. 12 is a graph showing the cycling profile of the cathode material for a sodium ion battery of example 6.
Fig. 13 is an XRD plot of the cathode material for a sodium ion battery of comparative example 1.
Fig. 14 is a graph showing the cycling profile of the cathode material for a sodium ion battery of comparative example 1.
Fig. 15 is an XRD plot of the cathode material for a sodium ion battery of comparative example 2.
Fig. 16 is a graph showing the cycling profile of the cathode material for a sodium ion battery of comparative example 2.

**Detailed Description of the Invention**

As described above, it is an object of the present disclosure to provide a cathode material for a sodium ion battery, a preparation method and use thereof.

In one example of the present disclosure, there is provided a cathode material for a sodium ion battery having a coating structure, the cathode material having a general chemical formula of: $Na_{1+a}Ni_xMn_yFe_zA_mB_nO_2$, wherein $-0.35 \le a \le 0.20$, $0.08 < x \le 0.5$, $0.05 < y \le 0.48$, $0 < z < 0.4$, $0 < m < 0.24$, $0.0 < n < 0.06$, $x+y+z+m+n=1$;
A is a modified element, and the A element comprises one or two or more of Ti, Zn, Co, Al, Zr, Y, Ca, Li, Rb, Cs, W, Ce, Mo, Ba, Mg, Ta, Nb, V, Sc, Sr, B, F, P, and Cu elements;
the B element is an element in a coating layer, and the B element comprises one or two or more of Ti, Co, Al, Zr, Y, Ca, Li, Rb, Cs, W, Ce, Mo, Ba, Mg, Ta, Nb, V, Sc, Sr, B, F, P, and Cu elements.

In one example of the present disclosure, there is provided a preparation method of a cathode material for a sodium ion battery, comprising the steps of:

(1) after uniformly mixing the sodium source, the nickel source, the manganese source, the iron source and the A source by a solid phase mixing method, performing a first sintering, wherein a sintering atmosphere is a gas containing oxygen, and sintering conditions are that the heating rate is 3-5°C/min, the temperature is 780-980°C, and the time is 8-30h; cooling and crushing to obtain a semi-finished product; and
(2) after the semi-finished product and the B source are mixed uniformly via a ball milling method, then peforming a second sintering, wherein a sintering atmosphere is a gas containing oxygen, and sintering conditions are that a temperature rising rate is 6-9°C/min, a temperature is 180-850°C, and a time is 2-10h, cooling and crushing to obtain the cathode material for a sodium ion battery having a coating structure.

Definitions:

The semi-finished product according to the present disclosure refers to a product obtained by mixing a sodium source, a nickel source, a manganese source, an iron source and an A source and then sintering same, i.e. an oxide containing the sodium source, the nickel source, the manganese source, the iron source and the A source. The molecular formula of the semi-finished product is obtained by testing with an ICP (Inductively Coupled Plasma Spectrometer).

In the present disclosure, A is mainly used as a modified element, doped in the crystal structure, and plays the role of stabilizing the crystal structure, so as to improve the cycling performance; the semi-finished product and the B source are mixed, after sintering, the B source diffuses or migrates to the surface of the crystal structure of the semi-finished product to form a coating layer, and the oxide of the B element is further clad on the surface of the semi-finished product, thereby solving the interface problem of the cathode material, reducing the occurrence of side reactions, and further improving the cycling performance.

The unit of the full width at half maximum of the diffraction peak in the present disclosure is the same as the unit of the diffraction angle $2\Theta$. A diffraction angle of around X° in the present disclosure means a diffraction angle of X°±1°, for example around 16° means 16°±1°, i.e. 15°-17°.

The raw materials or reagents used in the present disclosure are commercially available from mainstream manufacturers. Those in which manufacturers are not specified or concentrations not specified are raw materials or reagents that can be conventionally obtained, provided that they can perform the intended function, without particular limitation. The instruments and equipments used in this example are all purchased from major commercial manufacturers, and are not particularly limited as long as they can perform the intended functions. Where specific techniques or conditions are not specified in the examples, they are performed according to techniques or conditions described in the literature in the art or according to the product manual. The raw materials and equipment sources used in the examples and comparative examples are shown in Table 1.

Table 1 Feedstocks/equipment used in the examples of the present disclosure

| Feedstock/equipment | Model/grade | Manufacturer/vendor |
|---|---|---|
| Sodium carbonate | / | Guizhou Golden Molar Chemical Co. Ltd. |
| Manganese carbonate | / | Shandong Puhler New Material Co. Ltd. |
| Nickel carbonate | / | Baoding Fairsky Industrial Co. Ltd. |
| Ferric oxide | / | Hengshengyuan New Material Technology Co. Ltd. |

(continued)

| Feedstock/equipment | Model/grade | Manufacturer/vendor |
|---|---|---|
| Zinc oxide | / | Guizhou Tianlihe Chemical Co. Ltd. |
| Titanium dioxide | R60 | Nanjing Tianxing New Material Co. Ltd. |
| Titanium dioxide | / | Hangzhou Hemeng Chemical Co. Ltd. |
| Boron trioxide | 500 mesh | Guizhou Tianlihe Chemical Co. Ltd. |
| Alumina | / | Guizhou Tianlihe Chemical Co. Ltd. |
| Magnesium oxide | / | Guizhou Tianlihe Chemical Co. Ltd. |
| Laser particle size analyzer | MSU2000 | Malvern Instruments Ltd. (UK) |
| Automatic specific surface and porosity analyzer | TriStarII3020 | Micromeritics instrument corp (US) |
| Powder ray diffractometer | X'Pert PRO MPD | PANalytical B.V |
| Xinwei Battery Test System | CT-4008-5V50mA-164 | Xinwei Co. Ltd |
| High-efficiency vacuum drying box | KP-BAK-03E-02 | Dongguan Kerui Electrical and Mechanical Equipment Co., Ltd. |
| Ultramicro stone disk mill | - | Suzhou Xiran Industrial Equipment Co. Ltd. |

Herein, the specific surface area of the cathode material for a sodium ion battery in the examples of the present disclosure was measured according to the national standard GB/T19587-2006 gas adsorption BET method for determining the specific surface area of a solid substance of the People's Republic of China. Analytical instrument: Tristar II 3020 Automatic Specific Surface and Porosity Analyzer, test parameters: adsorbate $N_2$, 99.999%, coolant liquid nitrogen, P0 actual measurement, volume measurement mode, adsorption pressure deviation 0.05mmHg, equilibrium time 5s, relative pressure point selection $P/P_0$: 0.05; 0.1; 0.15; 0.2; 0.25; 0.30, sample pretreatment; the empty sample tube+stopper mass was weighed and recorded as $M_1$, a sample of 3.8 - 4.2g was weighed, 9.5mm of specific surface tube with 3/8 inch bulb was added, FlowPrep 060 degassing station was used to set 200°C, purging was performed with inert gas, heating and degassing was performed for 0.5h, the sample tube+stopper+sample mass was removed and recorded as $M_2$ cooled to room temperature, sample mass $M=M_2-M_1$, and test was performed on the machine to record the BET value.

Herein, the tap density (TD) of the cathode material for a sodium ion battery in the examples of the present disclosure is measured according to the national standard GB/T 5162-2006 determination of metal powder tap density of the People's Republic of China. Test instrument: Zs-202 Tap Density Meter. Test parameters for TD: the number of vibrations is 3000, the vibration frequency is $250\pm10$ times/min, the amplitude is $3\pm0.1$mm, the sample weighing accuracy is $50\pm0.5$g, the 100mL accuracy of tap cylinder is 1mL, the reading mode is used to read the maximum and minimum volumes and calculate the arithmetic mean value, and the calculation formula is $\rho = m/V$, with 2 decimals reserved.

Herein, the particle size of the cathode material for a sodium ion battery in the examples of the present disclosure is tested according to the national standard GB/T19077-2016 particle size distribution laser diffraction method of the People's Republic of China. Test equipment: Malvern, Master Size 2000 Laser Particle Size Analyzer. Test steps: 1g of powder was weighed, added into 60ml of pure water, externally sonicated for 5min, the sample was poured into the sampler, the test was conducted, and the test data was recorded. Conditions tested: the test principle is Mie (light scattering) theory 2000, the detection angle is 0- 135°, the external ultrasonic intensity is 40KHz, 180w, the particle refractive index is 1.692, the particle absorption rate is 1, the sample test time is 6s, the background test snap number is 6000 times, and the obscuration is 8- 12%.

Herein, the test method for free sodium (residual alkali) in the cathode material for a sodium ion battery in the examples of the present disclosure: $30g\pm0.01g$ sample was accurately weighed, the sample was put into a 250mL conical flask, magneton was placed, and 100mL of deionized water was added; the mixture was placed on a magnetic stirrer, the stirrer was turned on and stirred for 30 minutes; the mixed solution was filtered with qualitative filter paper and funnel; 1mL of filtrate was transferred into a 100mL beaker, and placed into a magnet; the beaker was placed on a magnetic stirrer, 2 drops of phenolphthalein indicator were added; titrated with 0.05mol/L hydrochloric acid standard volumetric solution ($V_{initial}=0$) until the color of solution changes from red to colorless, and the volume $V_1$ of 0.05mol/L hydrochloric acid standard volumetric solution (end point 1, $V_1 =V_{end1}-V_{initial}$) was recorded ; 2 drops of methyl red indicator were added with the color of solution changing from colorless to yellow; titrated with 0.05mol/L hydrochloric acid standard titration solution until the color of solution changes from yellow to orange; the beaker was placed on a heating furnace and heated until the solution boiled (the color of the solution changed from orange to yellow); the beaker was removed and cooled to room temperature; the beaker was placed on a magnetic stirrer and titrated with 0.05mol/L hydrochloric acid standard volumetric solution until the color of solution changed from yellow to light red; the volume $V_2$ of 0.05mol/L hydrochloric acid standard volumetric solution (end point 2, $V_2=V_{end2}-V_{end1}$) was recorded.

The calculation formula of free sodium content is as follows:

$$Na^+(wt\%) = \frac{c(V_1+V_2)\times10^{-3}\times M\times100}{m}\times100\%$$

$$Na_2CO_3(wt\%) = \frac{c\times V_2\times10^{-3}\times M_1\times100}{m}\times100\%$$

$$NaOH(wt\%) = \frac{c\times(V_1-V_2)\times10^{-3}\times M_2\times100}{m}\times100\%$$

$M$ is the relative atomic mass of sodium, $M_1$ is the relative molecular mass of sodium carbonate, $M_2$ is the relative molecular mass of sodium hydroxide and $m$ is the mass of the sample/g; $V_1$ is the first titration endpoint/mL; $V_2$ is the second titration endpoint/mL, c is the concentration of hydrochloric acid standard titration solution, mol/L, and 100 in the molecule represents the dilution factor.

The cathode material for a sodium ion battery of the present disclosure was tested for XRD using an X 'Pert PRO MPD analyzer. Test conditions: the light pipe is a Cu target, the wavelength is 1.54060, and a Be window is used; Incident light path: cable slit of 0.04 rad, divergence slit of 1/2°, shading plate of 10mm, anti-scatter slit of 1°; diffraction light path: anti-scatter slit of 8.0mm, cable slit of 0.04 rad, large Ni filter; scan range of 10°-90°, scan step size of 0.013°, dwell time of 30.6s per step, voltage of 40kV, current of 40mA. Powder sample preparation: a clean sampling spoon was used to put the powder into the groove of glass slide (for large particle sample, it is necessary to grind it into powder <50μm); one side (> 20mm) of scraping blade was placed against the surface of glass slide, and the other end was slightly lifted (included angle <10°); the edge of scraping blade was used to scrape the surface of powder sample; the glass slide was rotated by 90°, and scraped again, repeatedly scraped in two directions for several times; the surface of sample was free from texture; the excess powder was removed around the glass slide, and placed into powder ray diffraction analyzer. Sample analysis: the tested sample file was opened with analysis software High-Score Plus; first the background was determined, the peak was selected for peak confirmation, the fitting was repeated, the corresponding phase was selected to perform the matching and unit cell refinement, and and record the unit cell parameters were recorded. Test rationale: the Bragg equation reflects the relationship between the direction of the diffraction lines and the crystal structure. The diffraction must satisfy the Bragg formula: $2d\sin\theta=n\lambda$ (d: interplanar spacing; θ: Bragg angle; λ: the wavelength of the X-rays; n: reflection order). When X-rays irradiate on a sample, the scattered X-rays of the atoms in the crystal interfere produce strong X-ray diffraction lines in a particular direction. When X-rays irradiate the sample at different angles, diffraction occurs at different crystal planes, and the detector will receive the number of diffracted photons reflected from the crystal plane, thereby obtaining a spectrum of angle versus intensity.

Herein, the contents of elements in the cathode material for a sodium ion battery and the semi-finished product in the examples of the present disclosure were measured using an inductively coupled plasma technique (ICP): test instrument: ICP-OES iCAP 6300 inductively coupled plasma atomic emission spectrometry, detection conditions: detectors> 290000, camera temperature of the detector cooling system <-35°C, light room temperature of the optical system:38±0.1°C, wavelength range of the optical system 166nm-847nm, plasma observation mode vertical observation, plasma observation height 14mm, RF power 1150W, frequency 27.12MHz, auxiliary gas flow of injection system 0.5L/min, atomization gas flow of injection system 0.6L/min, pump speed 50rpm. Micro assay procedure: 0.2000 - 0.2100g of sample was accurately weighed in a 50mL of quartz beaker, 10ml of 1:1 aqua regia was added, the watch glass was covered, completely dissolved in the heating furnace, transferred to a 50mL volumetric flask, shook well at constant volume, tested on the machine, and the data was recorded; main quantity measurement: 1ml of the shaken solution was transferred to a 100mL volumetric flask, diluted to 100mL, and shook well. Test was performed on the machine and data was recorded.

The sodium ion battery of the present disclosure is composed of an electrode, an electrolyte, a separator, and an aluminum-plastic film. Specifically, wherein the electrode includes a positive electrode and a negative electrode, and the positive electrode is made of a material including a cathode current collector and a cathode active material coated on the cathode current collector, and a binder, a conductive aid, etc. the cathode active material for a sodium ion battery having a coating structure is the cathode material of the present disclosure. The negative electrode is made of a material comprising a current collector and an anode active substance coated on the current collector, and a binder, a conductive aid, etc.; a separator is a PP/PE thin film conventionally used in the art for separating a positive electrode and a negative electrode from each other; the aluminum-plastic film is an inclusion body of a positive electrode, a negative electrode, a separator, and an electrolyte.

The adhesive in the present disclosure is mainly used for improving adhesion characteristics between cathode active material particles and each other and between cathode active material particles and a current collector. The adhesive of the present disclosure may be selected from conventional adhesives commercially available in the art. In particular, the adhensive may be selected from polyvinyl alcohol, carboxymethyl cellulose, hydroxypropyl cellulose, polyvinyl chloride, carboxylated polyvinyl chloride, polyvinyl fluoride, ethylene oxide containing polymers, polyvinyl pyrrolidone, polyurethane, polytetrafluoro ethylene, polyvinylidene 1,1-difluoride, polyethylene, polypropylene, styrene-butadiene rubber, acrylated styrene-butadiene rubber, epoxy, nylon, or combinations thereof.

The conductive aid of the present disclosure may be selected from conventional conductive aids commercially available in the art. In particular, the conductive aid may be selected from a carbon-based material (e.g. natural graphite, artificial graphite, carbon black, acetylene black, ketjen black, or carbon fiber), a metal-based material (e.g. metal powder or metal fibers including copper, nickel, aluminum, silver, etc.), a conductive polymer (e.g. a polyphenylene derivative), or a combination thereof.

In the following examples, the cathode material of the present disclosure was used to make a sodium button cell as follows:

cathode preparation: the cathode material of the present disclosure, a binder, polyvinylidene fluoride (PVDF) and conductive carbon black (S. P) were thoroughly mixed in a weight ratio of 7:2:1, stirred to form a uniform slurry, coated on an aluminum foil current collector, dried and pressed into a pole piece. Punching, weighing and baking were performed on the pressed cathode sheet, and then the battery was assembled in a vacuum glove box, firstly the shell bottom of the button cell was placed, and foamed nickel (2.5mm) and anode metal sodium sheet were placed on the shell bottom (manufacturer: Shenzhen Youyan Technology Co. Ltd.), and 0.5g of an electrolyte was injected into an environment with a relative humidity of less than 1.5%, wherein the electrolyte was a mixed solvent of ethylene carbonate (EC), diethyl carbonate (DEC) and dimethyl carbonate (DMC) in a mass ratio of 1: 1: 1, and the electrolyte was a 1 mol/L sodium hexafluorophosphate solution. A separator and a cathode sheet were placed, then a shell cover of a button cell were covered and sealed, so as to obtain a button cell of type CR2430.

The disclosure will now be described in further detail by way of specific examples and with reference to the accompanying drawings.

**Example 1**

Sodium carbonate, manganese carbonate, nickel carbonate, ferric oxide, zinc oxide, calcium oxide and copper oxide were metered in the ratio according to the chemical formula Na: Mn: Ni: Fe: Zn: Ca: Cu = 0.82: 0.32: 0.24: 0.31: 0.08: 0.03: 0.02. The corresponding amount was weighed, and then added in proportion into the ultra-high speed multifunction mixer, rotated at 4000 r/min, and mix for 30 min. The uniformly mixed material was heated from a normal temperature to 950°C at a heating rate of 5°C/min under an air atmosphere, and kept at a constant temperature for 12 hours, then naturally cooled, and crushed by using an ultramicro stone disc mill with a disc spacing of 1.0mm and a rotational speed of 1800r/min to obtain a semi-finished product. The amount of substance in the semi-finished product was calculated by obtaining the molecular formula of the semi-finished product using the ICP test. Then, in a molar ratio of 1:0.04, the above-mentioned semi-finished product and the magnesium source (magnesium element) were weighed, put into a ball mill, 40Hz, ball mill 10min, the uniformly mixed material was heated from a normal temperature to 550°C at a heating rate of 8°C/min under an air atmosphere, and kept at a constant temperature for 3 hours, then naturally cooled, crushed by using an ultramicro stone disc mill with a disc spacing of 1.0mm and a rotational speed of 1800r/min, and sieved to obtain a cathode material for a sodium ion battery with a molecular formula of $Na_{0.81}Ni_{0.23}Mn_{0.31}Zn_{0.077}Fe_{0.297}Ca_{0.029}Cu_{0.019}Mg_{0.038}O_2$.

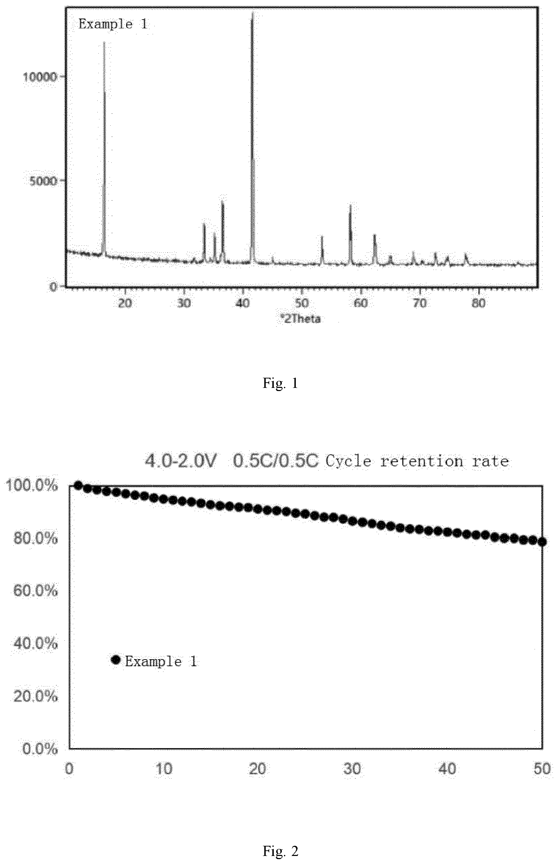

The cathode material for a sodium ion battery of this example was subjected to the XRD test, as shown in Fig. 1, and the results showed that: the diffraction angle 2Θ has a full width at half maximum FWHM of 0.120° at 16.49° and an interplanar spacing of 5.372 Å. There are five diffraction peaks having a diffraction angle 2Θ value between 30°-40°. The full width at half mixmum FWHM of the diffraction peak at 32.27° in 2Θ is 0.110°, and the interplanar spacing is 2.771 Å. The full width at half mixmum FWHM of the diffraction peak at 32.38° in 2Θ is 0.127°, and the interplanar spacing is 2.682Å. The full width at half mixmum FWHM of the diffraction peak at 34.44° in 2Θ is 0.16°, and the interplanar spacing is 2.602Å. The full width at half mixmum FWHM of the diffraction peak at 35.24° in 2Θ is 0.109°, and the interplanar spacing is 2.S44Å. The full width at half mixmum FWHM of the diffraction peak at 36.58° in 2Θ is 0.100°, and the interplanar spacing is 2.454Å. There are two diffraction peaks having a diffraction angle 2Θ value between 41°-46°, with the strongest peak at 41.59° in diffraction angle 2Θ value,where the full width at half maximum (FWHM) is 0.089° and the interplanar spacing is 2.169 Å, and the peak at 45.04° in 2Θ has a full width at half maximum (FWHM) of 0.082° and an interplanar spacing of 2.011 Å. The ratio of the peak intensity of the (003) diffraction peak at a diffraction angle 2Θ value of 16.49° to the peak intensity of the (104) diffraction peak at a diffraction angle 2Θ value of 41.59° is 0.57.

The cathode material had a free sodium content of 2.12%, a specific surface area BET of $0.91m^2/g$, a particle size D50 of 8.7 $\mu$m, and a tap density TD of $1.68g/cm^3$. Meanwhile, the cathode material of this example was prepared into a button cell and subjected to a capacity and cycling test, and Fig. 2 is a cycle graph of the cathode material of this example at 0.5C under the condition of 4.0-2.0V.

**Example 2**

Sodium carbonate, manganese carbonate, nickel oxide, ferrous oxalate, zinc oxide, titanium dioxide, yttrium trioxide were metered in a molar ratio according to the chemical formula Na: Mn: Ni: Fe: Zn: Ti: Y= 0.76: 0.32: 0.27: 0.297: 0.083: 0.02: 0.01. The corresponding amount was weighed, and then added in proportion into the ultra-high speed multi-function mixer, rotated at 10000 r/min, and mix for 15 min, and mixed uniformly. The uniformly mixed material was heated from a normal temperature to 945°C at a heating rate of 3°C/min under an air atmosphere, and kept at a constant temperature for 16 hours, then naturally cooled, and crushed by using an ultramicro stone disc mill with a disc spacing of 1.5mm and a rotational speed of 2000r/min to obtain a semi-finished product. The amount of substance in the semi-finished product was calculated by obtaining the molecular formula of the semi-finished product using the ICP test. The semi-finished product was then mixed with an aluminum source (aluminum element) in a molar ratio of 1: 0.015 , alumina was weighed into a ball mill, ball milling at a frequency of 40 Hz and ball milled at 15min, the uniformly mixed material was heated from a normal temperature to 780°C at a heating rate of 7°C/min under an air atmosphere for a constant temperature of 4 hours, then naturally cooled, an ultramicro stone disc mill with a disc spacing of 1.0mm and a rotational speed of 1800r/min was used to perform crushing and sieving, so as to obtain a cathode material for a sodium ion battery with a molecular formula of $Na_{0.76}Ni_{0.27}Mn_{0.32}Zn_{0.083}Fe_{0.282}Ti_{0.02}Y_{0.01}Al_{0.015}O_2$.

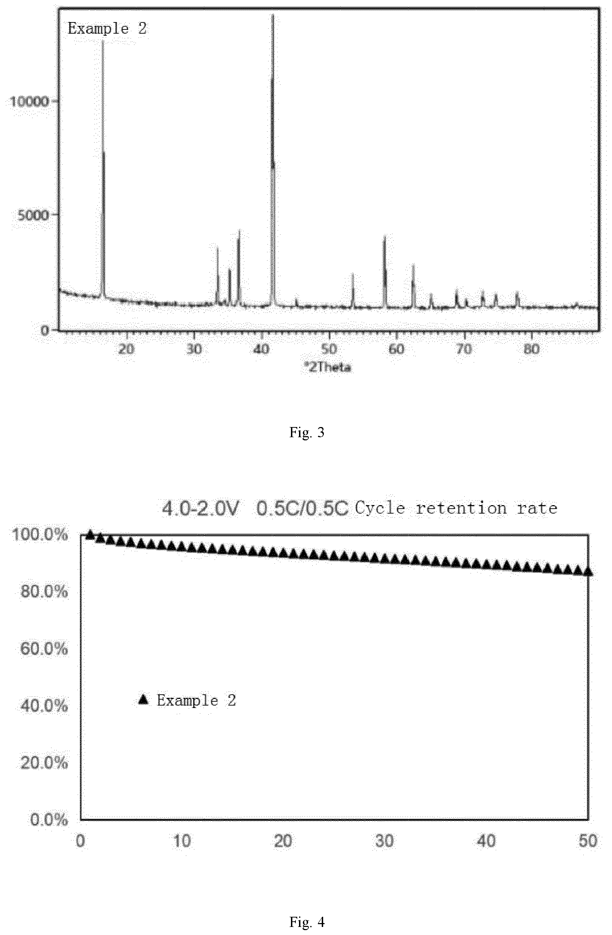

The cathode material for a sodium ion battery of this example was subjected to the XRD test, as shown in Fig. 3, and the results showed that: the diffraction angle 2Θ has a full width at half maximum FWHM of 0.109° at 16.47° and an interplanar spacing of 5.376 Å. There are four diffraction peaks having a diffraction angle 2Θ value between 30°-40°. The full width at half mixmum FWHM of the diffraction peak at 33.38° in 2Θ is 0.118°, and the interplanar spacing is 2.681Å. The full width at half mixmum FWHM of the diffraction peak at 34.42° in 2Θ is 0.120°, and the interplanar spacing is 2.603Å. The full width at half mixmum FWHM of the diffraction peak at 35.16° in 2Θ is 0.092°, and the interplanar spacing is 2.550Å. The full width at half mixmum FWHM of the diffraction peak at 36.51° in 2Θ is 0.086°, and the interplanar spacing is 2.459Å. There are two diffraction peaks having a diffraction angle 2Θ value between 41°-46°, with the strongest peak at 41.53° in diffraction angle 2Θ value,where the full width at half maximum (FWHM) is 0.079° and the interplanar spacing is 2.173 Å, and the peak at 44.99° in 2Θ has a full width at half maximum (FWHM) of 0.082° and an interplanar spacing of 2.012 Å. The ratio of the peak intensity of the (003) diffraction peak at a diffraction angle 2Θ value of 16.47° to the peak intensity of the (104) diffraction peak at a diffraction angle 2Θ value of 41.53° is 0.54.

The cathode material had a free sodium content of 1.88%, a specific surface area BET of $0.74m^2/g$, a particle size D50 of 10.4 $\mu$m, and a tap density TD of $2.12g/cm^3$. Meanwhile, the cathode material of this example was prepared into a button cell and subjected to a capacity and cycling test, and Fig. 4 is a cycle graph of the cathode material of this example at 0.5C under the condition of 4.0-2.0 V.

**Example 3**

Sodium carbonate, manganese oxide, nickel oxide, ferric oxide, zinc oxide and titanium dioxide were metered in a molar ratio according to the chemical formula Na: Mn: Ni: Fe: Zn: Ti= 0.83: 0.32: 0.23: 0.296: 0.098: 0.056. The corresponding amount was weighed according to the ratio, and then added in proportion into the ultra-high speed multi-function mixer, rotated at 14000 r/min, and mix for 25 min, and mixed uniformly. The uniformly mixed material was heated from a normal temperature to 974°C at a heating rate of 4°C/min under an air atmosphere, and kept at a constant temperature for 10 hours, then naturally cooled, and crushed by using an ultramicro stone disc mill with a disc spacing of 0.6mm and a rotational speed of 2000r/min to obtain a semi-finished product. The amount of substance in the semi-finished product was calculated by obtaining the molecular formula of the semi-finished product using the ICP test. The semi-finished product is then mixed with a titanium source in a molar ratio of 1: 0.04. Titanium oxide was weighed, placed into a ball mill, ball milled at a frequency of 45Hz and ball milling at 8min, the uniformly mixed material was heated from a normal temperature to 480°C at a heating rate of 9°C/min under an air atmosphere for 6 hours, then naturally cooled, an ultramicro stone disc mill with a disc spacing of 1.0mm and a rotational speed of 1800r/min was used to perform crushing and sieving, so as to obtain an anode material having a molecular formula of $Na_{0.83}Ni_{0.22}Mn_{0.32}Ti_{0.09}Zn_{0.098}Fe_{0.272}O_2$.

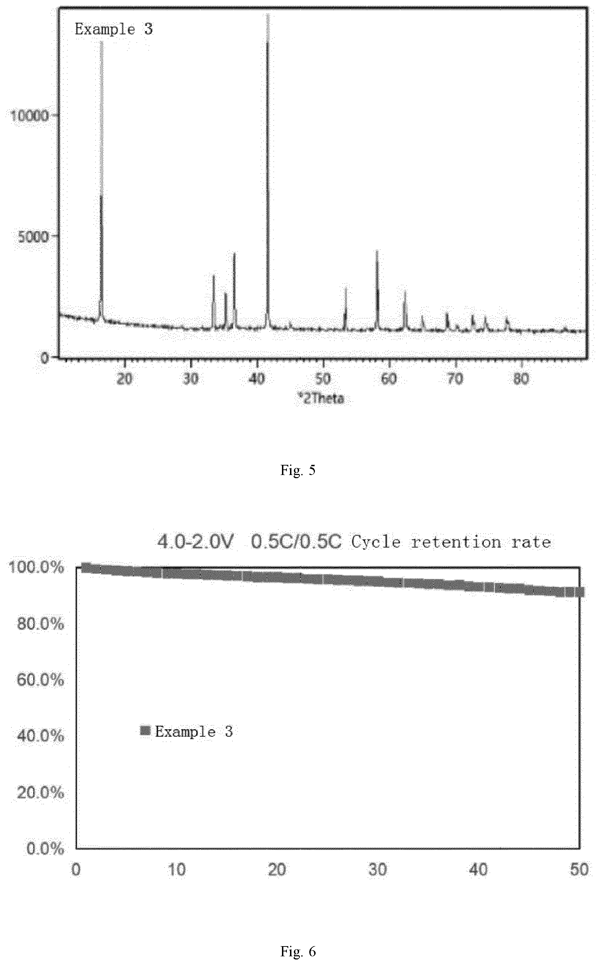

The cathode material for a sodium ion battery of this example was subjected to the XRD test, as shown in Fig. 5, and the results showed that: the diffraction angle $2\Theta$ has a full width at half maximum FWHM of 0.111° at 16.33° and an interplanar spacing of 5.423 Å. There are three diffraction peaks having a diffraction angle $2\Theta$ value between 30°-40°. The full width at half mixmum FWHM of the diffraction peak at 33.10° in $2\Theta$ is 0.104°, and the interplanar spacing is 2.701Å. The full width at half mixmum FWHM of the diffraction peak at 35.40° in $2\Theta$ is 0.214°, and the interplanar spacing is 2.533Å. The full width at half mixmum FWHM of the diffraction peak at 36.72° in $2\Theta$ is 0.181°, and the interplanar spacing is 2.445Å. There are two diffraction peaks having a diffraction angle $2\Theta$ value between 41°-46°, with the strongest peak at 41.64° in diffraction angle $2\Theta$ value,where the full width at half maximum (FWHM) is 0.079° and the interplanar spacing is 2.167 Å, and the peak at 45.04° in $2\Theta$ has a full width at half maximum (FWHM) of 0.080° and an interplanar spacing of 2.011 Å. The ratio of the peak intensity of the (003) diffraction peak at a diffraction angle $2\Theta$ value of 16.33° to the peak intensity of the (104) diffraction peak at a diffraction angle $2\Theta$ value of 41.64° is 0.65.

The cathode material had a free sodium content of 1.98%, a specific surface area BET of 0.67m²/g, a particle size D50 of 5.1 μm, and a tap density TD of 1.75g/cm³. Meanwhile, the cathode material of this example was prepared into a button cell and subjected to a capacity and cycling test, and Fig. 6 is a cycle graph of the cathode material of this example at 0.5C under the condition of 4.0-2.0V.

## Example 4

Metering sodium nitrate, manganese trioxide, nickel oxalate, ferrous oxalate, titanium dioxide and aluminium trioxide were metered in a molar ratio according to the chemical formula Na: Mn: Ni: Fe: Ti: Al= 0.79: 0.19: 0.3: 0.33: 0.17: 0.01. The corresponding amount was weighed, and then added in proportion into the ultra-high speed multi-function mixer, rotated at 17000 r/min, and mix for 45min, and mixed uniformly. The uniformly mixed material was heated to 890°C at a heating rate of 5°C/min under a mixed atmosphere of air and oxygen (the volume ratio of air to oxygen is 7: 3), kept at a constant temperature for 18 hours, then naturally cooled, and crushed by using an ultramicro stone disc mill with a disc spacing of 0.8mm and a rotational speed of 1800r/min to obtain a semi-finished product. The amount of substance in the semi-finished product was calculated by obtaining the molecular formula of the semi-finished product using the ICP test. The above-mentioned semi-finished product is then mixed with a boron source (B element) in a molar ratio of 1: 0.02. Bron oxide was weighted into a ball mill, ball milled at a ball milling frequency of 55Hz for 10min, the uniformly mixed material was heated from a normal temperature to 280°C at a heating rate of 6 °C/min under an air atmosphere at a constant temperature of 7 hours, then naturally cooled and sieved to obtain a cathode material with a molecular formula of $Na_{0.79}Ni_{0.3}Fe_{0.31}Mn_{0.19}Ti_{0.17}Al_{0.01}B_{0.02}O_2$.

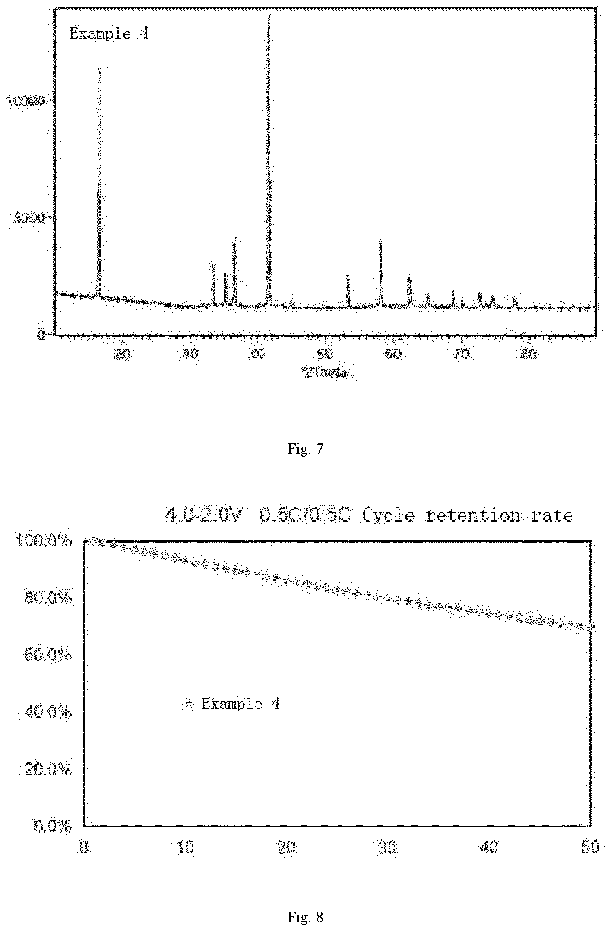

The cathode material for a sodium ion battery of this example was subjected to the XRD test, as shown in Fig. 7, and the results showed that: the diffraction angle $2\Theta$ has a full width at half maximum FWHM of 0.123° at 16.32° and an interplanar spacing of 5.427 Å. There are four diffraction peaks having a diffraction angle $2\Theta$ value between 30°-40°. The full width at half mixmum FWHM of the diffraction peak at 32.26° in $2\Theta$ is 0.170°, and the interplanar spacing is 2.772Å. The full width at half mixmum FWHM of the diffraction peak at 33.07° in $2\Theta$ is 0.111°, and the interplanar spacing is 2.706Å. The full width at half mixmum FWHM of the diffraction peak at 35.42° in $2\Theta$ is 0.092°, and the interplanar spacing is 2.533Å. The full width at half mixmum FWHM of the diffraction peak at 36.73° in $2\Theta$ is 0.095°, and the interplanar spacing is 2.445Å. There are two diffraction peaks having a diffraction angle $2\Theta$ value between 41°-46°, with the strongest peak at 41.642° in diffraction angle $2\Theta$ value,where the full width at half maximum (FWHM) is 0.09° and the interplanar spacing is 2.167 Å, and the peak at 45.03° in $2\Theta$ has a full width at half maximum (FWHM) of 0.08° and an interplanar spacing of 2.011 Å. The ratio of the peak intensity of the (003) diffraction peak at a diffraction angle $2\Theta$ value of 16.32° to the peak intensity of the (104) diffraction peak at a diffraction angle $2\Theta$ value of 41.642° is 0.67.

The cathode material had a free sodium content of 2.05%, a specific surface area BET of 0.59m²/g, a particle size D50 of 4.9 μm, and a tap density TD of 1.95g/cm³. Meanwhile, the cathode material of this example was prepared into a button cell and subjected to a capacity and cycling test, and Fig. 8 is a cycle graph of the cathode material of this example at 0.5C under the condition of 4.0-2.0V.

## Example 5

Sodium carbonate, manganese oxalate, nickel oxalate, ferrous oxalate, titanium dioxide and zinc oxide were metered in a molar ratio according to the chemical formula Na: Mn: Ni: Fe: Ti: Zn= 0.81: 0.31: 0.18: 0.3: 0.14: 0.07. The corresponding amount was weighed, and then added in proportion into the ultra-high speed multi-function mixer, rotated at 25000 r/min, and mix for 30min, and mixed uniformly. The uniformly mixed material was heated to 910°C at a heating rate of 4°C/min under a mixed atmosphere of air and oxygen (the volume ratio of air to oxygen is 9: 1), kept at a constant temperature for 40 hours, then naturally cooled, and crushed by using an ultramicro stone disc mill with a disc spacing of 0.4 mm and a rotational speed of 2200 r/min to obtain a semi-finished product. The amount of substance in the semi-finished product was calculated by obtaining the molecular formula of the semi-finished product using the ICP test. The semi-finished product was then mixed with an aluminum source (aluminum element) in a molar ratio of 1: 0.03. Alumina was weighed into a ball mill, ball milled at a ball milling frequency of 40 Hz for 30 min, the uniformly mixed material was heated from a normal temperature to 750°C at a heating rate of 6°C/min under an air atmosphere at a constant temperature for 8 hours, then naturally cooled, an ultramicro stone disc mill with a disc spacing of 1.2mm and a rotational speed of 2200 r/min was used to perform crushing and sieving, so as to obtain an anode material with a molecular formula of $Na_{0.8}Ni_{0.17}Mn_{0.3}Ti_{0.13}Fe_{0.3}Zn_{0.07}Al_{0.03}O_2$.

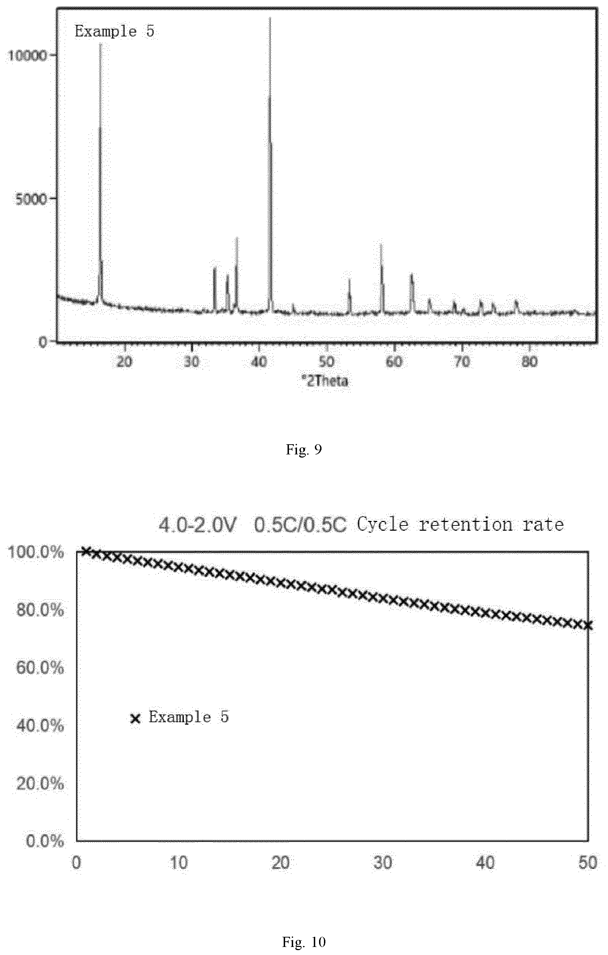

Fig. 9 shows the XRD spectrum of the cathode material of this example, and as shown in Fig. 9, it can be seen that the diffraction angle 2Θ value is a next most intense peak at 16.54°, with a full width at half maximum FWHM of 0.109° and an interplanar spacing of 5.353 A. There are four diffraction peaks having a diffraction angle 2Θ value between 30°-40°. The full width at half mixmum FWHM of the diffraction peak at 33.37° in 2Θ is 0.160°, and the interplanar spacing is 2.675Å. The full width at half mixmum FWHM of the diffraction peak at 35.21° in 2Θ is 0.184°, and the interplanar spacing is 2.547Å. The full width at half mixmum FWHM of the diffraction peak at 36.555° in 2Θ is 0.148°, and the interplanar spacing is 2.461Å. The full width at half mixmum FWHM of the diffraction peak at 37.21° in 2Θ is 0.103°, and the interplanar spacing is 2.415Å. There are two diffraction peaks having a diffraction angle 2Θ value between 41°-46°, with the strongest peak at 41.58° in diffraction angle 2Θ value having a full width at half maximum (FWHM) of 0.125° and an interplanar spacing of 2.171 Å. The diffraction peak at 2Θ of 45.04° has a full width at half maximum FWHM of 0.111° and an interplanar spacing of 2.015 Å. The ratio of the peak intensity of the (003) diffraction peak at a diffraction angle 2Θ value of 16.54° to the peak intensity of the (104) diffraction peak at a diffraction angle 2Θ value of 41.58° is 0.95.

The cathode material had a free sodium content of 2.03%, a specific surface area BET of 0.86m$^2$/g, a particle size D50 of 3.9 μm, and a tap density TD of 1.82g/cm$^3$. Meanwhile, the cathode material of this example was prepared into a button cell and subjected to a capacity and cycling test, and Fig. 10 is a cycle graph of the cathode material of this example at 0.5C under the condition of 4.0-2.0V.

**Example 6**

Sodium carbonate, manganese oxalate, nickel oxalate, ferrous oxalate, titanium dioxide and zinc oxide were metered in a molar ratio according to the chemical formula Na: Mn: Ni: Fe: Ti: Zn= 0.81: 0.31: 0.18: 0.3: 0.14: 0.07. The corresponding amount was weighed, and then added in proportion into the ultra-high speed multi-function mixer, rotated at 25000 r/min, and mix for 30min, and mixed uniformly. The uniformly mixed material was heated from a normal temperature to 910 °C at a heating rate of 4 °C/min under an air atmosphere, and kept at a constant temperature for 40 hours, then naturally cooled, and crushed by using an ultramicro stone disc mill with a disc spacing of 0.4 mm and a rotational speed of 2200 r/min to obtain a semi-finished product. The amount of substance in the semi-finished product was calculated by obtaining the molecular formula of the semi-finished product using the ICP test. Then, in a molar ratio of 1: 0.06, the above-mentioned semi-finished product and the aluminium source (aluminium element) were weighed, put into a ball mill, the ball mill frequency was 40Hz, and the ball mill was 30min; the uniformly mixed material was heated from a normal temperature to 750°C at a heating rate of 6 °C/min under an air atmosphere, and kept at a constant temperature for 8 hours, and then naturally cooled; an ultramicro stone disc mill with a disc spacing of 1.2 mm and a rotational speed of 2500 r/min was used for crushing and sieving to obtain an anode material with a molecular formula of $Na_{0.81}Ni_{0.165}Mn_{0.295}Ti_{0.13}Fe_{0.29}Zn_{0.06}Al_{0.06}O_2$.

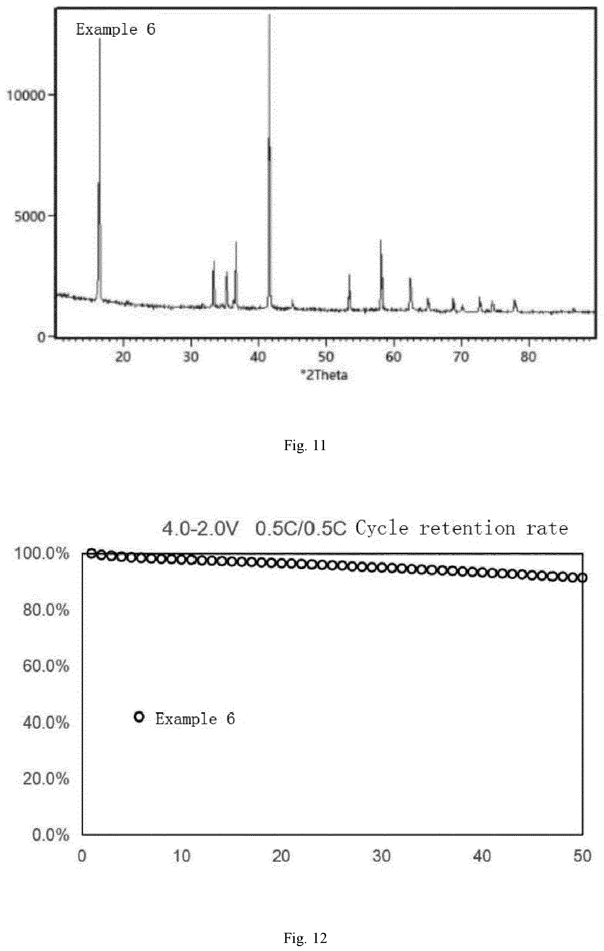

Fig. 11 shows the XRD spectrum of the cathode material of this example, and as shown in Fig. 11, it can be seen that the diffraction angle 2Θ value is a next most intense peak at 16.55°, with a full width at half maximum FWHM of 0.111° and an interplanar spacing of 5.351 A. There are four diffraction peaks having a diffraction angle 2Θ value between 30°-40°. The full width at half mixmum FWHM of the diffraction peak at 33.33° in 2Θ is 0.162°, and the interplanar spacing is 2.672Å. The full width at half mixmum FWHM of the diffraction peak at 35.22° in 2Θ is 0.181°, and the interplanar spacing is 2.542Å. The full width at half mixmum FWHM of the diffraction peak at 36.551° in 2Θ is 0.146°, and the interplanar spacing is 2.458Å. The full width at half mixmum FWHM of the diffraction peak at 37.23° in 2Θ is 0.105°, and the interplanar spacing is 2.412Å. There are two diffraction peaks having a diffraction angle 2Θ value between 41°-46°, with the strongest peak at 41.56° in diffraction angle 2Θ value having a full width at half maximum (FWHM) of 0.122° and an interplanar spacing of 2.172 Å. The diffraction peak at 2Θ of 45.06° has a full width at half maximum FWHM of 0.109° and an interplanar spacing of 2.013 Å. The ratio of the peak intensity of the (003) diffraction peak at a diffraction angle 2Θ value of 16.55° to the peak intensity of the (104) diffraction peak at a diffraction angle 2Θ value of 41.56° is 0.93.

The cathode material had a free sodium content of 1.94%, a specific surface area BET of 0.88m$^2$/g, a particle size D50 of 4.3 μm, and a tap density TD of 1.87g/cm$^3$. Meanwhile, the cathode material of the example was prepared into a button cell and subjected to a capacity and cycling test, and Fig. 12 is a cycle graph of the cathode material of the example at 0.5C under the condition of 4.0-2.0V.

**Comparative example 1**

Metering sodium nitrate, manganese trioxide, nickel oxalate, ferrous oxalate, titanium dioxide, aluminium trioxide, and boron oxide were metered in a molar ratio according to the chemical formula Na: Mn: Ni: Fe: Ti: Al: B= 0.79: 0.19: 0.3: 0.31: 0.17: 0.01: 0.02. The corresponding amount was weighed, and then added in proportion into the ultra-high speed multi-function mixer, rotated at 17000 r/min, and mix for 45min, and mixed uniformly. The uniformly mixed material was heated to 890°C at a heating rate of 5°C/min under a mixed atmosphere of air and oxygen (the volume ratio of air to oxygen is 7: 3), kept at a constant temperature for 18 hours, then naturally cooled, and crushed by using an ultramicro stone disc mill with a disc spacing of 0.8mm and a rotational speed of 1800r/min, and sieved to obtain a cathode material having a molecular formula of $Na_{0.79}Ni_{0.3}Fe_{0.31}Mn_{0.19}Ti_{0.17}Al_{0.01}B_{0.02}O_2$.

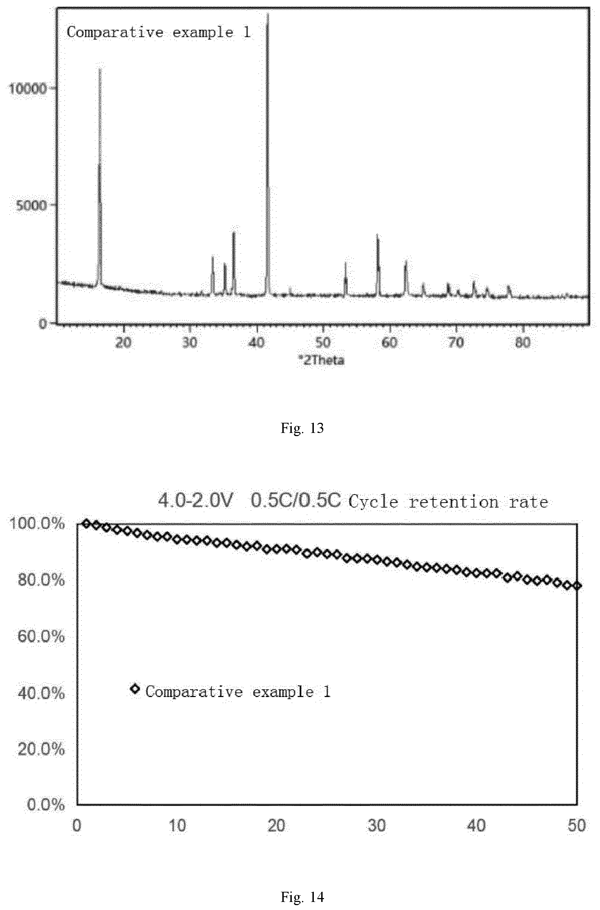

The cathode material for a sodium ion battery of this example was subjected to the XRD test, as shown in Fig. 13, and the results showed that: the diffraction angle $2\Theta$ has a full width at half maximum FWHM of 0.113° at 16.30° and an interplanar spacing of 5.445 Å. There are four diffraction peaks having a diffraction angle $2\Theta$ value between 30°-40°. The full width at half mixmum FWHM of the diffraction peak at 32.21° in $2\Theta$ is 0.150°, and the interplanar spacing is 2.775Å. The full width at half mixmum FWHM of the diffraction peak at 33.04° in $2\Theta$ is 0.106°, and the interplanar spacing is 2.716Å. The full width at half mixmum FWHM of the diffraction peak at 35.32° in $2\Theta$ is 0.087°, and the interplanar spacing is 2.453Å. The full width at half mixmum FWHM of the diffraction peak at 36.63° in $2\Theta$ is 0.090°, and the interplanar spacing is 2.455Å. There are two diffraction peaks having a diffraction angle $2\Theta$ value between 41°-46°, with the strongest peak at 41.611° in diffraction angle $2\Theta$ value,where the full width at half maximum (FWHM) is 0.085° and the interplanar spacing is 2.174 Å, and the peak at 45.01° in $2\Theta$ has a full width at half maximum (FWHM) of 0.08° and an interplanar spacing of 2.024 Å. The ratio of the peak intensity of the (003) diffraction peak at a diffraction angle $2\Theta$ value of 16.30° to the peak intensity of the (104) diffraction peak at a diffraction angle $2\Theta$ value of 41.611° is 0.64.

The cathode material had a free sodium content of 2.45%, a specific surface area BET of 0.51m²/g, a particle size D50 of 5.5 μm, and a tap density TD of 2.11g/cm³. Meanwhile, the cathode material of the comparative example was prepared into a button cell and subjected to a capacity and cycling test, and Fig. 14 is a cycle graph of the cathode material of the comparative example at 0.5C under the condition of 4.0-2.0V.

**Comparative example 2**

Sodium carbonate, manganese carbonate, nickel carbonate and ferrous oxalate were metered in a molar ratio according to the chemical formula Na: Mn: Ni: Fe= 0.76: 0.35: 0.30: 0.35. The corresponding amount was weighed, and then added in proportion into the ultra-high speed multi-function mixer, rotated at 20000 r/min, and mix for 15 min, and mixed uniformly. The uniformly mixed material was heated from a normal temperature to 905°C at a heating rate of 3°C/min under an air atmosphere, and kept at a constant temperature for 18 hours, then naturally cooled, and crushed by using an ultramicro stone disc mill with a disc spacing of 1.5 mm and a rotational speed of 2000 r/min to obtain a semi-finished product, and then the above-mentioned semi-finished product was mixed with an aluminium source (aluminium element) at a molar ratio of 1: 0.015, alumina was weighed into a ball mill, ball milled at a ball milling frequency of 40Hz for 15min, the uniformly mixed material was heated from a normal temperature to 780°C at a heating rate of 7°C/min under an air atmosphere at a constant temperature of 4 hours, then naturally cooled, crushed by using an ultramicro stone disc mill with a disc spacing of 1.0 mm and a rotational speed of 1800 r/min, and sieved to obtain a cathode material for a sodium ion battery having a molecular formula of $Na_{0.76}Ni_{0.30}Mn_{0.343}Fe_{0.342}Al_{0.015}O_2$.

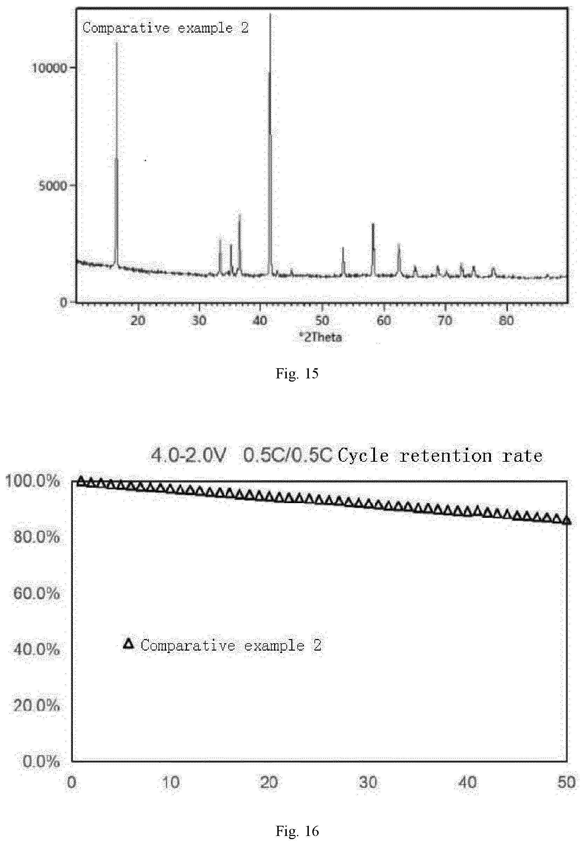

The cathode material for a sodium ion battery of this example was subjected to the XRD test, as shown in Fig. 15, and the results showed that: the diffraction angle $2\Theta$ has a full width at half maximum FWHM of 0.163° at 16.46° and an interplanar spacing of 5.378 Å. There are four diffraction peaks having a diffraction angle $2\Theta$ value between 30°-40°. The full width at half mixmum FWHM of the diffraction peak at 33.34° in $2\Theta$ is 0.161°, and the interplanar spacing is 2.682Å. The full width at half mixmum FWHM of the diffraction peak at 35.23° in $2\Theta$ is 0.136°, and the interplanar spacing is 2.542Å. The full width at half mixmum FWHM of the diffraction peak at 36.58° in $2\Theta$ is 0.137°, and the interplanar spacing is 2.451Å. The full width at half mixmum FWHM of the diffraction peak at 37.16° in $2\Theta$ is 0.122°, and the interplanar spacing is 2.419Å. There are three diffraction peaks having a diffraction angle $2\Theta$ value between 41°-46°, with the strongest peak at 41.61° in diffraction angle $2\Theta$ value having a full width at half maximum FWHM of 0.127° and an interplanar spacing of 2.167 Å, the diffraction peak at 43.21° in $2\Theta$ having a full width at half maximum FWHM of 0.131° and an interplanar spacing of 2.091 Å, and with a diffraction peak at 45.01° in $2\Theta$ having a full width at half maximum FWHM of 0.122° and an interplanar spacing of 2.012 Å. The ratio of the peak intensity of the (003) diffraction peak at a diffraction angle $2\Theta$ value of 16.46° to the peak intensity of the (104) diffraction peak at a diffraction angle $2\Theta$ value of 41.61° is 0.57.

The cathode material had a free sodium content of 14.5%, a specific surface area BET of 0.57m²/g, a particle size D50 of 11.8 μm, and a tap density TD of 1.87g/cm³. Meanwhile, the cathode material of the comparative example was prepared into a button cell and subjected to a capacity and cycling test, and Fig. 16 is a cycle graph of the cathode material of the comparative example at 0.5C under the condition of 4.0-2.0V.

The properties of the cathode materials obtained in Examples and Comparative Examples are summarized in Table 2 below.

Table 2 Performance analysis data of the cathode materials prepared from Examples and Comparative Examples

|  | Example 1 | Example 2 | Example 3 | Example 4 | Example 5 | Example 6 | Comparative example 1 | Comparative example 2 |
|---|---|---|---|---|---|---|---|---|
| Particle size D50 ($\mu$m) | 8.7 | 10.4 | 5.1 | 4.9 | 3.9 | 4.3 | 5.5 | 11.8 |
| Specific surface area ($m^2$/g) | 0.91 | 0.74 | 0.67 | 0.59 | 0.86 | 0.88 | 0.51 | 0.57 |
| Free sodium content /% | 2.12 | 1.88 | 1.98 | 2.05 | 2.03 | 1.94 | 2.45 | 14.5 |
| TD(g/cm$^3$) | 1.68 | 2.12 | 1.75 | 1.95 | 1.82 | 1.87 | 2.11 | 1.87 |
| 4.0-2.0V ⌐ 0.1 C Discharge capacity (mAh/g) | 132.1 | 133.7 | 130.5 | 135.0 | 127.5 | 115.6 | 130.1 | 125.0 |
| 4.0-2.0V 0.5 C/ 0.5C retention rate after 50 cycles | 92.1% | 94.3% | 93.79% | 89.5% | 87.58% | 91.5% | 73.5% | 86.3% |

It can be seen from the table that the cathode material in Comparative Example 1 has no coating element B added, and the capacity retention rate after 50 cycles is 73.5%, which is much lower than the cycle retention rates in Examples 1-6; the cathode material of Comparative Example 2, without the addition of doping element A, has a capacity retention rate of 86.3% after 50 cycles, much lower than those of Examples 1-6.

The applicant states that the description is only a specific example of the present disclosure, but the scope of protection of the present disclosure is not limited thereto, and those skilled in the art should understand that any changes and substitutions which can be easily made by those skilled in the art within the technical scope of the present disclosure disclosed are within the scope of protection and disclosure of the present disclosure.

**Claims**

1.  A cathode material for a sodium ion battery having a coating structure, **characterized in that** the cathode material has a general chemical formula of: $Na_{1+a}Ni_xMn_yFe_zA_mB_nO_2$, wherein $-0.35 \leq \alpha \leq 0.20$, $0.08 < x \leq 0.5$, $0.05 < y \leq 0.48$, $0.03 < z < 0.4$, $0.03 < m < 0.24$, $0.001 < n < 0.06$, x+y+z+m+n=1;

    A is a modified element, and the A element comprises one or two or more of Ti, Zn, Co, Al, Zr, Y, Ca, Li, Rb, Cs, W, Ce, Mo, Ba, Mg, Ta, Nb, V, Sc, Sr, B, F, P, and Cu elements;
    the B element is an element in a coating layer, and the B element comprises one or two or more of Ti, Co, Al, Zr, Y, Ca, Li, Rb, Cs, W, Ce, Mo, Ba, Mg, Ta, Nb, V, Sc, Sr, B, F, P, and Cu elements.

2.  The cathode material for a sodium ion battery according to claim 1, wherein the cathode material has a general chemical formula of: $Na_{1+a}Ni_xMn_yFe_zA_mB_nO_2$, where $-0.35 \leq \alpha \leq 0.20$, $0.1 \leq x \leq 0.3$, $0.1 \leq y \leq 0.4$, $0.2 \leq z \leq 0.4$, $0.05 \leq m \leq 0.2$, $0.01 < n \leq 0.05$, x+y+z+m+n=1;

    preferably, A comprises one or two or more of Ti, Zn, Al, Zr, Y, Ca, Li, W, Ce, Mo, Ba, Mg, Ta, Nb, Sc, Sr, B, F, P, and Cu elements;
    more preferably, A comprises one or two or more of Ti, Zn, Al, Y, Ca, Zr, Li, Mg, Mn, Sr, F, B, and Cu; and/or
    the B comprises one or two or more of Ti, Co, Mn, Al, Zr, Y, Li, Mg, B, F, P, and Cu elements; more preferably, B is selected from one or a combination of two or more of Mg, Zr, P, F, Al, Mg, Ti, and B elements.

3.  The cathode material for a sodium ion battery according to claim 1 or 2, wherein A comprises a Zn element and an M element, where a content of the Zn element is represented by b, and a total content of the Zn element and the M element is m;

the general chemical formula of the cathode material is: $Na_{1+a}Ni_xMn_yFe_zZn_bM_{m-b}B_nO_2$, $-0.35 \le a \le 0.20$, $0.08 < x \le 0.5$, $0.05 < y \le 0.48$, $0.03 < z < 0.4$, $0.03 < m < 0.24$, $0.001 < n < 0.06$, x+y+z+m+n=1, $0 < b \le 0.12$ (preferably, $-0.35 \le a \le 0.20$, $0.1 \le x \le 0.3$, $0.1 \le y \le 0.4$, $0.2 \le z \le 0.4$, $0.05 \le m \le 0.2$, $0.01 < n \le 0.05$, x+y+z+m+n=1, $0 < b \le 0.12$), the M element being selected from one or two or more of Ti, Co, Mn, Al, Zr, Y, Ca, Li, Rb, Cs, W, Ce, Mo, Ba, Mg, Ta, Nb, V, Sc, Sr, B, F, P, and Cu elements;
preferably, the M element is selected from one or two or more of Mn, Ti, Al, Y, Ca, Mg, F, P, B, and Cu elements;
or A comprises a Ti element and an N element, where a content of the Ti element is represented by c, and a total content of the Ti element and the N element is m;
the cathode material has a general chemical formula of $Na_{1+a}Ni_xMn_yFc_zTi_cN_{m-c}B_nO_2$. $-0.35 \le \alpha \le 0.20$, $0.08 < x \le 0.5$, $0.05 < y \le 0.48$, $0.03 < z < 0.4$, $0.03 < m < 0.24$, $0.001 < n < 0.06$, x+y+z+m+n=1, $0 < c < 0.24$ (preferably, $-0.35 \le a \le 0.20$, $0.1 \le x \le 0.3$, $0.1 < y \le 0.4$, $0.2 \le z \le 0.4$, $0.05 \le m \le 0.2$, $0.01 < n \le 0.05$, x+y+z+m+n=1, $0 < c < 0.24$), and the N is selected from one or two or more of Ti, Zn, Co, Mn, Al, Zr, Y, Ca, Li, Rb, Cs, W, Ce, Mo, Ba, Mg, Ta, Nb, V, Sc, Sr, B, F, P, and Cu elements;
preferably, the N is selected from one or two or more of Mn, Mg, F, Li, Zn, Al, Y, Ca, B, and Cu elements.

4. The cathode material for a sodium ion battery according to claim 1 or 2, wherein the A element contains Zn element, Ti element and X element, where a content of Zn element is represented by d, a content of Ti element is represented by e, and a total content of Zn element, Ti element and X element is m;

the cathode material has the general chemical formula of $Na_{1+a}Ni_xMn_yFe_zZn_dTi_eX_{m-d-e}B_nO_2$, $-0.35 \le \alpha \le 0.20$, $0.08 < x \le 0.5$, $0.05 < y \le 0.48$, $0.03 < z < 0.4$, $0.03 < m < 0.24$, $0.001 < n < 0.06$, x+y+z+m+n=1, $0 < d < 0.1$, $0 < e < 0.24$ (preferably, $-0.35 \le a \le 0.20$, $0.1 \le x \le 0.3$, $0.1 \le y \le 0.4$, $0.2 \le z \le 0.4$, $0.05 \le m \le 0.2$, $0.01 < n \le 0.05$, x+y+z+m+n=1, $0 < d \le 0.1$, $0 < e < 0.24$), and the X is selected from one or a combination of two or more of Co, Mn, Al, Zr, Y, Ca, Li, Rb, Cs, W, Ce, Mo, Ba, Mg, Ta, Nb, V, Sc, Sr, B, F, P, and Cu elements;
preferably, the X is selected from one or a combination of two or more of Co, Mn, Al, Zr, Y, Ca, Li, W, Ba, Mg, Nb, B, F, P, and Cu elements.

5. The cathode material for a sodium ion battery according to any one of claims 1-4, wherein in a powder X-ray diffraction spectrum of the cathode material for a sodium ion battery, there are at least two diffraction peaks having a diffraction angle 2Θ value between 41°-46°;

preferably, the two diffraction peaks having a diffraction angle 2Θ value between 41°-46° have a full width at half maximum FWHM of 0.07°-0.29°; and/or the two diffraction peaks having a diffraction angle 2Θ value between 41°-46° have an interplanar spacing between 1.85Å-2.75Å;
preferably, there are two diffraction peaks having a diffraction angle 2Θ value between 41°-46°, the diffraction angle 2Θ values of the two diffraction peaks being around 41° and around 45°, respectively;
preferably, the diffraction peak having a diffraction angle 2Θ value around 41° has a full width at half maximum FWHM of 0.07°-0.17°; the diffraction peak having a diffraction angle 2Θ value around 45° has a full width at half maximum FWHM of 0.07°-0.23°;
preferably, there are at least three diffraction peaks having a diffraction angle 2Θ value between 30°-40°;
preferably, there are three diffraction peaks having a diffraction angle 2Θ value between 30°-40°, the diffraction angle 2Θ values being around 33°, around 35° and around 36°, respectively;
or there are four diffraction peaks having a diffraction angle 2Θ value between 30°-40°, the diffraction angle 2Θ values being around 32°, around 33°, around 35° and around 36°, respectively;
or there are four diffraction peaks having a diffraction angle 2Θ value between 30°-40°, the diffraction angle 2Θ values being around 33°, around 35°, around 36° and around 37°, respectively;
or there are four diffraction peaks having a diffraction angle 2Θ value between 30°-40°, the diffraction angle 2Θ values being around 33°, around 34°, around 35° and around 36°, respectively;
or there are five diffraction peaks having a diffraction angle 2Θ value between 30°-40°, the diffraction angle 2Θ values being around 32°, around 33°, around 34°, around 35° and around 36°, respectively;
preferably, a ratio of a peak intensity of a (003) diffraction peak at a diffraction angle 2Θ value of around 16° to a peak intensity of a (104) diffraction peak at a diffraction angle 2Θ value of around 41° is 0.4-1.4;
preferably, the ratio of the peak intensity of the (003) diffraction peak at a diffraction angle 2Θ value of around 16° to the peak intensity of the (104) diffraction peak at a diffraction angle 2Θ value of about 41° is 0.45-1.2.

6. The cathode material for a sodium ion battery according to any one of claims 1 to 5, wherein the cathode material for a sodium ion battery has a specific surface area of 0.2-1.2m$^2$/g; preferably, the cathode material for a sodium ion battery has a specific surface area of 0.4-1.0m$^2$/g;

and/or the cathode material for a sodium ion battery has a particle size D50 of 2-18μm; preferably, the cathode material for a sodium ion battery has a particle size D50 of 3-15μm; more preferably, the cathode material for a sodium ion battery has a particle size D50 of 5-11μm;
and/or the cathode material for a sodium ion battery has a tap density of 1.2-2.9g/cm$^3$; preferably, the cathode material for a sodium ion battery has a tap density of 1.2-2.6g/cm$^3$;
and/or the cathode material for a sodium ion battery has a powder X-ray diffraction spectrum showing an α-NaFeO$_2$ type layered structure;
and/or a total free sodium content of the cathode material for a sodium ion battery is 2.3% or less; preferably, the total free sodium content of the cathode material for a sodium ion battery is 2.0% or less.

7. A preparation method of a cathode material for a sodium ion battery according to any one of claims 1 to 6, **characterized by** comprising the steps of:

(1) after mixing a sodium source, a nickel source, a manganese source, an iron source and an A source uniformly, performing a first sintering, cooling and crushing to obtain a semi-finished product;
(2) after mixing the semi-finished product with a B source uniformly, then performing a second sintering, cooling and crushing to obtain the cathode material for a sodium ion battery .

8. The preparation method of a cathode material for a sodium ion battery according to claim 7, wherein in step (1), a solid phase mixture method is used for mixing the sodium source, the nickel source, the manganese source, the iron source and the A source;
and/or, in step (2), the semi-finished product is mixed with the B source using a solid phase mixing method, preferably ball milling method.

9. The preparation method of a cathode material for a sodium ion battery according to claim 7 or 8, wherein in step (1), conditions for the first sintering are that a heating rate is 3-5°C/min, a temperature is 780-980°C, and a time is 8-40h;

and/or, in step (2), conditions of the second sintering are that a heating rate is 6-9°C/min, a temperature is 180-850°C, and a time is 2-10h;
and/or an atmosphere of the first sintering is a gas containing oxygen; preferably air, oxygen or a mixture thereof;
and/or an atmosphere of the second sintering is a gas containing oxygen; preferably air, oxygen or a mixture thereof;

10. The preparation method of a cathode material for a sodium ion battery according to any one of claims 7 to 9, wherein the Na source comprises one or two or more of sodium hydroxide, sodium carbonate, sodium nitrate, sodium oxalate, sodium chloride, sodium fluoride, and sodium acetate;

and/or the A source is selected from oxides of one or two or more of Ti, Zn, Co, Al, Zr, Y, Ca, Li, Rb, Cs, W, Ce, Mo, Ba, Mg, Ta, Nb, V, Sc, Sr, B, and Cu elements, salts thereof, or organics thereof;
preferably, the A source is selected from carbonates, oxalates, nitrates or oxides of one or two or more of Ti, Zn, Co, Al, Zr, Y, Ca, Li, Rb, Cs, W, Ce, Mo, Ba, Mg, Ta, Nb, V, Sc, Sr, B, and Cu elements;
more preferably, the A source comprises one or two or more of zinc oxide, titanium dioxide, calcium oxide, copper oxide, aluminum oxide, yttrium trioxide, diboron trioxide, barium oxide, niobium oxide, magnesium oxide, and zirconium oxide;
and/or the B source is selected from oxides of one or two or more of Ti, Co, Mn, Al, Zr, Y, Ca, Li, Rb, Cs, W, Ce, Mo, Ba, Mg, Ta, Nb, V, Sc, Sr, B, F, P, and Cu elements, salts thereof, and organics thereof;
preferably, the B source is selected from carbonates, oxalates, nitrates or oxides of one or two or more of Ti, Co, Mn, Al, Zr, Y, Ca, Li, Rb, Cs, W, Ce, Mo, Ba, Mg, Ta, Nb, V, Sc, Sr, B, F, P, and Cu elements;
more preferably, the B source comprises one or two or more of magnesium oxide, aluminum oxide, titanium oxide, magnesium acetate, aluminum acetate, aluminum nitrate, boric acid, and boron oxide.

11. A cathode material for a sodium ion battery, **characterized in that** the cathode material for a sodium ion battery is prepared by the preparation method of a cathode material for a sodium ion battery according to any one of claims 7 to 10.

**12.** A positive electrode for a sodium ion battery, **characterized in that** the positive electrode for a sodium ion battery comprises the cathode material for a sodium ion battery according to any one of claims 1 to 6 or claim 11 as a cathode active material.

**13.** A sodium ion battery **characterized in that** the sodium ion battery comprises the positive electrode for a sodium ion battery according to claim 12, a negative electrode, and an electrolyte comprising a sodium salt.

**14.** Use of the sodium ion battery according to claim 13 as a power source in photovoltaic, electric power, energy storage systems or mobile storage devices or low-end electric vehicles;
and/or use of the sodium ion battery according to claim 13 in a distributed energy storage, centralized energy storage or low-end power battery energy storage device.

**15.** An electrical power system, energy storage system or mobile storage device **characterized by** being prepared from the sodium ion battery according to claim 13.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Europäisches
Patentamt

European
Patent Office

Office européen
des brevets

# EUROPEAN SEARCH REPORT

**Application Number**

EP 23 19 4664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 843 498 A (BEIJING EASPRING MAT TECH CO LTD) 2 August 2022 (2022-08-02) * Examples 1, 8, 11, 13-15, claims * ----- | 1-15 | INV.<br>C01G53/00<br>H01M4/04<br>H01M4/1391<br>H01M4/36<br>H01M4/485<br>H01M4/505<br>H01M4/525<br>H01M10/054 |
| Y | CN 114 975 982 A (GUIZHOU ZHENHUA NEW MAT CO LTD ET AL.) 30 August 2022 (2022-08-30) * Examples, claims * ----- | 1-15 | |
| Y | CN 114 956 203 A (GUIZHOU ZHENHUA E-CHEM CO LTD) 30 August 2022 (2022-08-30) * Examples, claims * ----- | 1-15 | |
| Y | CN 113 851 652 A (SVOLT ENERGY TECH CO LTD) 28 December 2021 (2021-12-28) * Examples, claims * ----- | 1-15 | |
| Y | CN 104 953 172 A (SHANGHAI SINOPOLY JIAHUA BATTERY TECHNOLOGY CO LTD ET AL.) 30 September 2015 (2015-09-30) * Examples, claims * ----- | 1-15 | |

**TECHNICAL FIELDS SEARCHED (IPC)**

C01G
H01M

The present search report has been drawn up for all claims

| Place of search | Date of completion of the search | Examiner |
|---|---|---|
| Munich | 28 January 2024 | Nemes, Csaba A. |

EPO FORM 1503 03.82 (P04C01)

## ANNEX TO THE EUROPEAN SEARCH REPORT
## ON EUROPEAN PATENT APPLICATION NO.

EP 23 19 4664

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2024

| Patent document cited in search report | | Publication date | Patent family member(s) | | Publication date |
|---|---|---|---|---|---|
| CN 114843498 | A | 02-08-2022 | CN | 114843498 A | 02-08-2022 |
| | | | WO | 2023169591 A1 | 14-09-2023 |
| CN 114975982 | A | 30-08-2022 | CN | 114975982 A | 30-08-2022 |
| | | | EP | 4273102 A2 | 08-11-2023 |
| | | | JP | 2023166332 A | 21-11-2023 |
| | | | KR | 20230153954 A | 07-11-2023 |
| | | | US | 2023352675 A1 | 02-11-2023 |
| CN 114956203 | A | 30-08-2022 | CN | 114956203 A | 30-08-2022 |
| | | | EP | 4276073 A1 | 15-11-2023 |
| | | | JP | 2023164343 A | 10-11-2023 |
| | | | KR | 20230153944 A | 07-11-2023 |
| | | | US | 2023352676 A1 | 02-11-2023 |
| CN 113851652 | A | 28-12-2021 | NONE | | |
| CN 104953172 | A | 30-09-2015 | NONE | | |

EPO FORM P0459

For more details about this annex : see Official Journal of the European Patent Office, No. 12/82

## REFERENCES CITED IN THE DESCRIPTION

### Patent documents cited in the description

- GB 195872006 T
- GB 51622006 T
- GB 190772016 T